(19) Europäisches Patentamt
European Patent Office
Office européen des brevets

(11) **EP 2 468 399 A1**

(12) **EUROPEAN PATENT APPLICATION**

(43) Date of publication:
**27.06.2012 Bulletin 2012/26**

(51) Int Cl.:
$B01J\ 23/50$ [(2006.01)]     $B01D\ 53/86$ [(2006.01)]
$B01D\ 53/94$ [(2006.01)]

(21) Application number: **10390001.5**

(22) Date of filing: **23.12.2010**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Cyprus University of Technology
3603 Limassol (CY)**

(72) Inventors:
• **Costa, N. Costas
  3603 Limassol (CY)**
• **Valanidou, Lilian
  3603 Limassol (CY)**

• **Savva, Petros G.
  3603 Limassol (CY)**
• **Theologides, Christodoulos
  3603 Limassol (CY)**

(74) Representative: **Soteriou-Loizidou, Lina
Chrysses Demetriades & Co.
284 Arch. Makarios III Avenue
Fortuna Court, Block B
CY-3105 Limassol (CY)**

Remarks:
Amended claims in accordance with Rule 137(2) EPC.

(54) **Catalyst for the reduction of NO to N2 with ethanol or ethanol and hydrogen under lean DENOx conditions**

(57)     The invention relates to a novel catalyst having excellent activity, selectivity and stability for reducing nitric oxide to gas nitrogen, with ethanol or an ethanol-hydrogen mixture being used as a reducing agent, in the low temperature range of 150-300 ˚C and in the presence of an excess of oxygen (e.g., 5 % vol), $H_2O$ (5 % vol) and $SO_2$ (50 ppm) in the supply. The inventive catalyst consists of silver crystals which are in contact with the phases of a mixed MgO, $CeO_2$ and $Al_2O_3$ medium. The Ag/MgO-$CeO_2$-$Al_2O_3$ catalyst can be used to obtain NO conversion levels which are greater than 40 %, nitrogen selectivity values of greater than 95 % and $CO_2$ selectivity values greater than 97% under $NO_x$ oxidation conditions in the 150-400 ˚C temperature range and for a surface contact time of 0.09 s. In particular, 90% NO conversion is obtained as well as $N_2$ and $CO_2$ selectivity levels of 99 % at 250 ˚C with a reaction mixture of 500 ppm NO/1000 ppm $C_2H_5OH$ /5% $O_2$ /5% $H_2O$ / 50ppm $SO_2$/He:

Figure 2

EP 2 468 399 A1

## Description

## FIELD OF THE TECHNIQUE

This invention refers to a novel catalyst based on silver, with excellent activity, stability and selectivity for reducing NO to $N_2$ by using ethanol or ethanol-hydrogen mixtures as reducing agents in the low temperature range 150-300 ˚C and in the presence of an excess of oxygen (e.g. 5 %vol), 5 %vol $H_2O$ and 50 ppm $SO_2$ in the reactor supply.

This catalyst can be used in the selective conversion of nitric oxide, produced in many industrial combustion processes, to $N_2$ gas. It is known that ethanol and/or hydrogen is available in numerous industrial installations. Using the said catalyst, just a very small percentage of the available ethanol (or ethanol and hydrogen) is necessary for the reduction of NO to $N_2$ under clearly oxidizing conditions of $NO_x$ in the low temperature range 150-300 ˚C.

The selective catalytic reduction of NO with $NH_3$ ($NH_3$-SCR) in the presence of an excess of oxygen has aroused great interest in the last three decades and has recently been reported and revised in the literature [1]. In this process, ammonia is used as reducing agent of nitrogen oxides and nitrogen and water are produced as the reaction products. Vanadium pentoxide ($V_2O_5$) supported on oxides such as $TiO_2$, $Al_2O_3$ and $SiO_2$ and promoted with $WO_3$ constitutes an efficient catalyst used in industry [2]. This catalyst is active in the temperature range 250-550 ˚C [3]. Nevertheless, the toxicity and problems of handling ammonia [1, 4] constitute the main obstacles preventing the use of this technology by the general public, and at the same time it seems that problems deriving from spillages of $NH_3$ and corrosion and poisoning of the catalyst by $SO_2$ cannot be solved with current technology. The automobile industry never applied the $NH_3$-SCR process. This is primarily due to the absence of $NH_3$ in the exhaust gases of automobiles and the marked deactivation of the $NH_3$-SCR catalyst ($V_2O_5$-$WO_3$/$TiO_2$) in the presence of excess oxygen in the reaction stream [5] (as in the case of automobiles with diesel engines).

Nevertheless, the $NH_3$-SCR process is the best catalytic technology known for the elimination of NO in stationary sources and it is used as a decontamination process primarily in conventional thermal power stations.

The selective catalytic reduction of $NO_x$ with hydrogen ($H_2$-SCR) has been recently reported to be a very successful technology for the removal of $NO_x$ under lean burn conditions [6-13]. A platinum based catalyst supported on a mixed oxide support of MgO and $CeO_2$ has been reported to be the most active and selective catalyst for this reaction in the range of 150-300˚C [14-16]. Nevertheless, in spite of the exceptional activity and selectivity of the latter technology ($H_2$-SCR), there are still some concerns regarding the use of such a technology in the cases where hydrogen is not available on the spot. In addition, the use of the $H_2$-SCR technology for the reduction of $NO_x$ from mobile sources (e.g., automobiles, ships) becomes more distant because of the safety issues related with hydrogen.

The selective catalytic reduction of NO with hydrocarbons (HC-SCR) has been exhaustively studied in recent years as a potential competitor of the $NH_3$-SCR process [17, 18]. The main advantage of this catalytic reaction is the potential use of hydrocarbons as reducing species that can be found in the exhaust gases of combustion processes operating under clearly oxidizing conditions of $NO_x$. The catalysts that have attracted the attention for the HC-SCR process of NO can be divided into three main groups: (a) supported noble metals; (b) zeolites exchanged with metal ions; and (c) metal oxide catalysts [3]. Among these materials, supported noble metals have shown the best and only catalytic behaviour for the reduction of NO with hydrocarbons under oxidation conditions at reaction temperatures as low as 120-250 ˚C [19-27]. Also, it was found that these catalysts are more resistant to deactivation in the presence of water and/or $SO_2$ [28, 29]. Nevertheless, in spite of their exceptional activity in this low temperature region, supported Pt and Pd catalysts present low values of selectivity towards $N_2$ [30, 31] and a relatively narrow range of operating temperatures. On the contrary, zeolites exchanged with metal ions are very active and selective for the SCR of NO with hydrocarbons at relatively low temperatures. However, these catalysts present an even narrower operating temperature range compared to that of supported noble metals. Also, the activity of zeolitic catalysts exchanged with metal ions drastically diminishes in the presence of water. Finally, catalysts based on metal oxides showed low activity but high selectivity towards $N_2$ for HC-SCR processes of NO but at temperatures above 500 ˚C.

Current concerns regarding carbon dioxide emissions into the atmosphere and the problems resulting from the use of $NH_3$ as reducing agent [32] have encouraged a search for suitable molecules for the catalytic reduction of NO in gaseous currents coming from combustion. It has been reported that ethanol is a very energetic reducing agent for the reaction NO/$C_2H_5OH$ [33-42] and can potentially be used for reducing $NO_x$ emissions coming from both stationary and mobile combustion sources. Ethanol or bio-ethanol is currently used in a large number of various industrial sectors such as the household products industry [43], the automotive industry (use of bio-ethanol as a fuel) [44] the pharmaceutical industry [45] the fine chemicals industry [46] and the petroleum refining industry [47]. So, ethanol is available in many industrial installations wherein various processes are operated requiring a heat input. To this must be added the progressive demand for bio-ethanol with a growth rate of approximately 10-15 % a year [48], which means that the availability in the industrial sector will be increasing further in the coming years.

Therefore, an ethanol-SCR catalytic technology of $NO_x$ can be considered as an important qualitative leap compared to $NH_3$-SCR and Urea-SCR catalytic processes.

The catalysts that have attracted the attention for the ethanol-SCR process of NO can be divided into two main groups: (a) supported noble metals such as Pt and Pd [33-36]; and (b) supported silver [37-41]. Both categories were found to present good catalytic activity for the reduction of NO with ethanol under oxidation conditions. Supported noble metals were found to operate at reaction temperatures as low as 200-300 ˚C [33, 34], while supported silver catalysts were found to operate at slightly higher reaction temperatures (>250 ˚C) [37-40]. Nevertheless, in spite of their good activity supported Pt, Pd and Ag catalysts present low (not acceptable) values of selectivity towards $N_2$ [33-41] and a relatively narrow range of operating temperatures. Moreover, most of the above catalysts present very low selectivity values towards $CO_2$ due to the formation of CO and organic molecules (e.g., acetaldehyde) at reaction temperatures lower than 450 ˚C [33-35].

The work presented so far in the open literature reflect the general agreement of scientists that the support and the nature of the active metal have a crucial effect on the activity and selectivity (towards $N_2$ and $CO_2$) of supported catalysts in the reduction of NO with ethanol in the presence of an excess of oxygen [33-42].

On the basis of everything that has been stated, it is of industrial interest to develop an improved catalyst based on silver with the following characteristics for the reaction $NO/C_2H_5OH/O_2$:

(a) High activity and selectivity at low reaction temperatures (e.g., below 300 ˚C) with $N_2$ yields greater than 90 % and selectivity values towards $CO_2$ greater than 95 %.
(b) A broad operating temperature range (e.g., 150-400 ˚C) with appreciable values of NO conversion and selectivity to $N_2$ and $CO_2$.
(c) Prolonged stability during the course of the operation.
(d) Stability in the presence of at least 5 %vol $H_2O$ and $SO_2$ in the range 1-100 ppm.

**DESCRIPTION OF THE INVENTION**

This invention describes a novel catalyst based on silver, with excellent activity, selectivity and stability for reducing nitric oxide using ethanol or ethanol and hydrogen mixtures as reducing agents in the low temperature range 200-300 ˚C and in the presence of an excess of oxygen. The catalyst consists of silver crystals in contact with the three phases of MgO, $CeO_2$ and $Al_2O_3$. This is achieved by impregnation of the support with an aqueous solution of silver nitrate ($AgNO_3$) as described in Example 1. Calcination of the resulting solid in air at 600 ˚C for at least 2 h is necessary for the complete elimination of the nitrate anions and stabilization of the surface structure of the support. The catalyst 0.1 wt% Ag/25%MgO-25%$CeO_2$-$Al_2O_3$ can be prepared by any of the means known by practitioners of this art, including the technique of damp impregnation of the support with an aqueous solution of the Ag precursor (e.g., solution of silver nitrate). Finally, a reduction has to be carried out with hydrogen at 300 ˚C for at least 2 h in order to fully reduce the silver oxide to metallic silver. The resulting catalytic surface is very stable, without any deactivation being observed during 48 h of reaction or more, even in the presence of 5 %vol $H_2O$ and 50 ppm $SO_2$. Almost complete conversion of NO is obtained at 250 ˚C on this catalyst in a contact time of 0.09 s. The industrial reactors of $NH_3$-SCR of NO which use industrial catalysts operate under typical surface contact times of 0.08-0.4 s [1, 49-51]. By means of applying this new catalyst based on Ag (e.g., 0.1 %wt Ag/25%MgO-25%$CeO_2$-$Al_2O_3$) the conversion of NO to $N_2$ with ethanol or ethanol and $H_2$ under clearly oxidizing conditions of $NO_x$ can be considered at a broader scale.

This invention describes a novel catalyst based on silver, with excellent activity, selectivity and stability for reducing nitric oxide to nitrogen using ethanol or an ethanol and hydrogen mixture as reducing agents in the low temperature range 150-300 ˚C and in the presence of an excess of oxygen, 5 %vol $H_2O$ and 50 ppm $SO_2$ in the supply. The catalyst was prepared by the damp impregnation method previously described above. Identical catalysts can be prepared using other preparation techniques known by practitioners of this art, and other metallic precursors such as silver acetate, silver acetylacetonate, silver chloride, etc. Nevertheless, it has been found in this work that the preparation of the catalyst mentioned above using the sol-gel method [52] provided the same results in terms of catalytic activity and selectivity to $N_2$ in the $NO/C_2H_5OH/O_2$ or $NO/C_2H_5OH/H_2/O_2$ reactions.

In this work it was also found that the nature of the support has a large effect on the activity and selectivity of the corresponding Ag supported catalyst. While Ag supported on $Al_2O_3$ presents selectivity values towards $N_2$ and $CO_2$ lower than 89 and 88%, respectively, the catalyst Ag/25%MgO-25%$CeO_2$-$Al_2O_3$ exhibits selectivities higher than 96 and 97%, respectively. Also, the integral production rate of nitrogen obtained on the catalyst Ag/25%MgO-25%$CeO_2$-$Al_2O_3$ is higher than that found with any of the catalysts reported so far (see Table 1) though close to 60 % higher than that obtained on $Al_2O_3$. Nevertheless, the catalyst Ag/25%MgO-25%$CeO_2$-$Al_2O_3$ presents a broad operating temperature range ($\Delta T$, see Table 1), broader than that obtained on the catalysts Ag/$SiO_2$ and Ag/$Al_2O_3$. It must be noted that the last catalyst is the most active and selective of all the ones reported for the reaction $NO/C_2H_5OH/O_2$ under $NO_x$ oxidation conditions (Table 1). The integral production rate of nitrogen on the catalyst Ag/25%MgO-25%$CeO_2$-$Al_2O_3$ can even be raised by means of increasing the partial pressure of ethanol or the addition of hydrogen in the feed. In particular, the integral production rate of $N_2$ on the said catalyst can be raised up to almost 30% when

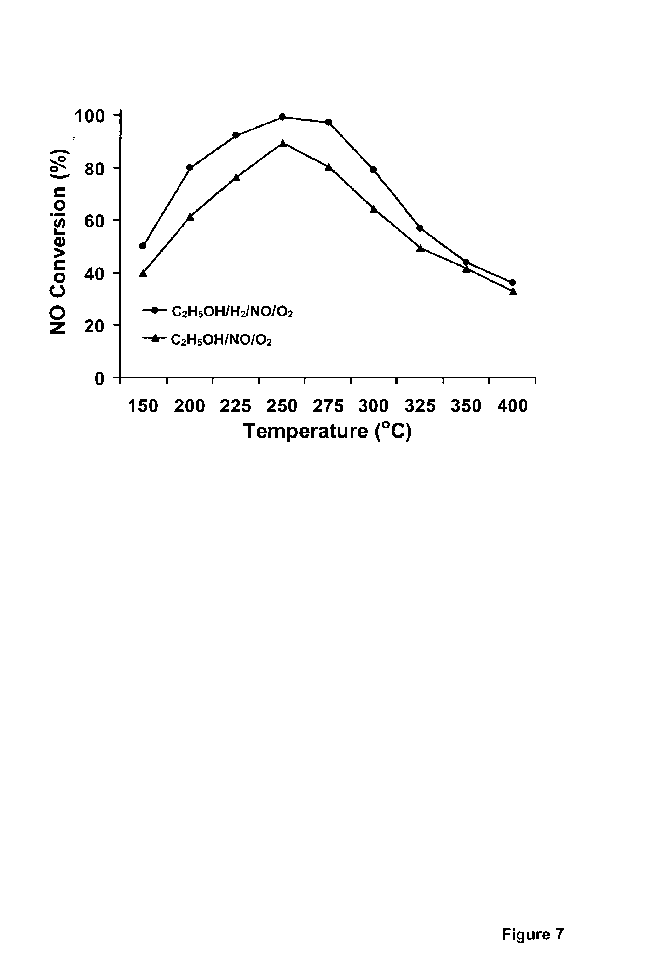

2000 ppm of $H_2$ is added in the feed at 200 °C (Example 8, Fig. 7).

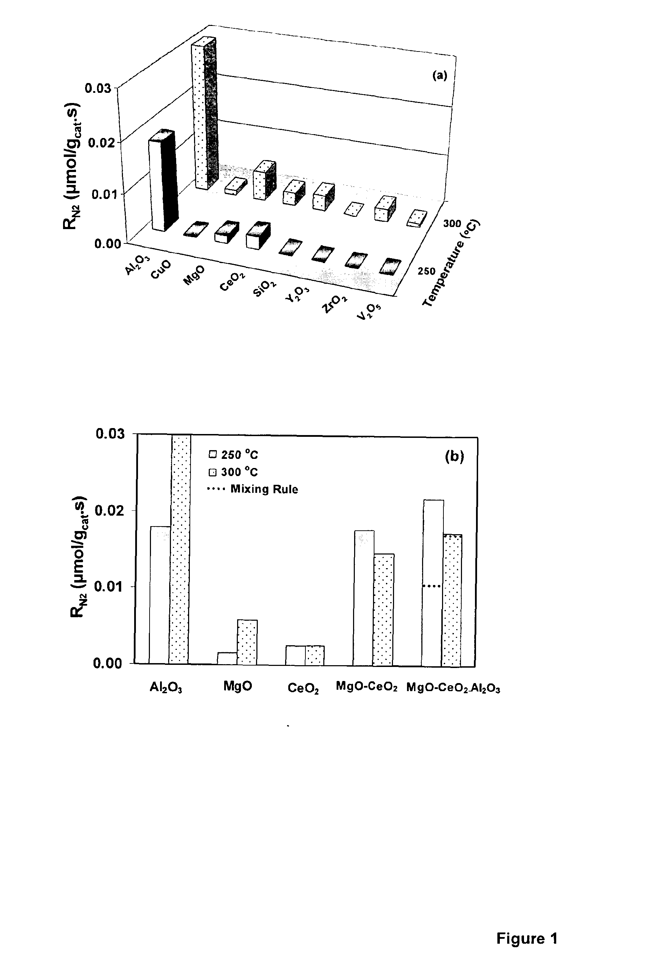

The chemical composition of the support is an important factor which affects the catalytic behaviour (reaction velocity and selectivity) of supported Ag catalysts. It is shown (see Example 2, Fig. 1) that Ag supported on the mixed oxide $MgO-CeO_2-Al_2O_3$ with a weight ratio of 1:1:2 presents the highest integral production velocity of $N_2$ at both low and high reaction temperatures.

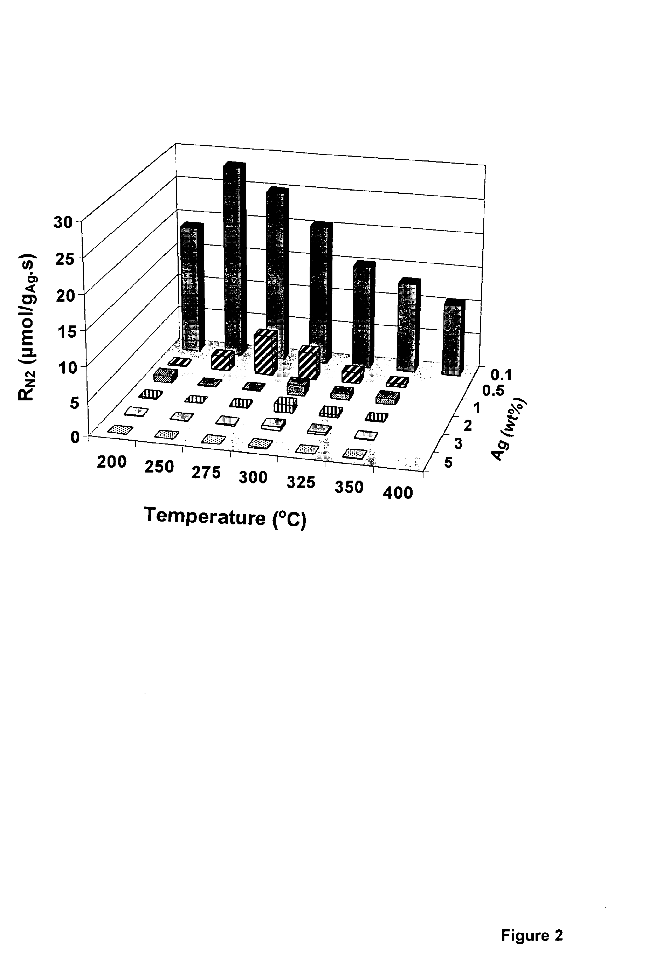

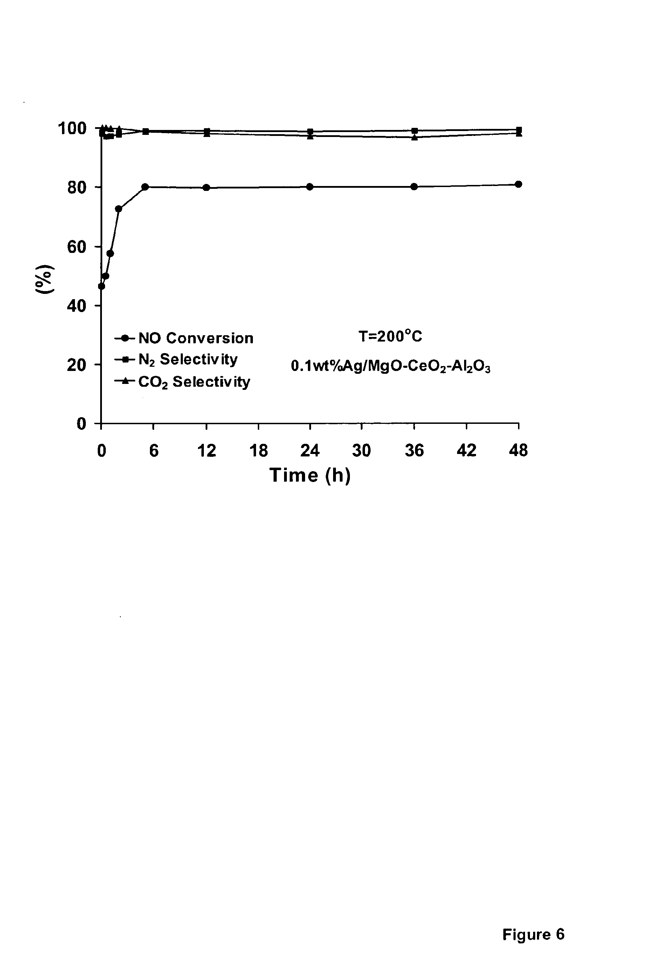

The silver content of the catalyst $Ag/25\%MgO-25\%CeO_2-Al_2O_3$ is a crucial factor affecting its catalytic behaviour. As shown in Fig. 2 (see also Example 3), the catalyst with the least metallic content (0.1 %wt) presents the highest integral reaction rate referring to a gram of metallic Ag, compared to that of catalysts with higher metallic contents. The formation reaction velocity of $N_2$ decreases with an increase in the silver content. Since catalysts with low metal contents have high dispersions, it can be concluded that the reduction reaction of NO with ethanol in the presence of excess $O_2$ occurs favourably on the surface of small metallic particles. Galvano and Paravano [53] reported very similar results on different gold supported catalysts for the reaction $NO/H_2$ reaction. The latter authors found that the selectivity of the reaction $NO/H_2$ towards $N_2$ decreased with the increase of the particle size of the gold for catalysts supported on MgO and $Al_2O_3$. In addition, Costa and Efstathiou [14-16] reported similar results on different platinum supported catalysts for the reaction $NO/H_2/O_2$ reaction. The catalyst $Ag/25\%MgO-25\%CeO_2-Al_2O_3$ showed excellent stability with the reaction time in the presence of 5 %vol $H_2O$ in the supply, which is higher than that observed with the catalyst $Ag/SiO_2$. Constant production velocities of $N_2$ were observed even after 48 h in current on the catalyst 0.1 %wt $Ag/25\%MgO-25\%CeO_2-Al_2O_3$. On the other hand, the integral production velocity of $N_2$ obtained with the catalyst $Ag/SiO_2$ fell substantially during the first 2 hours in current and continued to fall during longer times in stream. This is typical behaviour of many $NO_x$ catalysts that have been reported when water is present in the supply stream [3], which means that the catalytic stability results reported here are of major practical importance. The catalyst $Ag/25\%MgO-25\%CeO_2-Al_2O_3$ presents excellent stability in the presence of $SO_2$ (Example 7, Figure 6). Moreover, it was found that the performance of the last catalyst (i.e., NO conversion and selectivity towards $N_2$ and $CO_2$) improves significantly in the presence of $SO_2$ in the feed (Figure 6). This was found to be due to the sulphation of the support which takes place during the reaction at hand, when $SO_2$ is present in the feed. The same effect was also observed when the catalyst was sulphated (prior reaction) by using an aqueous ammonium sulphate solution according to Example 1. It is noted that 90% conversion of NO and 98% selectivity towards $N_2$ and $CO_2$ is obtained at 250 °C on this catalyst in a contact time of 0.09 s. These are the highest values of NO conversion and $N_2$ and $CO_2$ selectivities ever reported for the reaction at hand (Table 1).

The present invention, e.g., the sulphated catalyst 0.1% $Ag/25\%MgO-25\%CeO_2-Al_2O_3$, is a novel catalyst wherein the main differences with respect to catalysts based on noble metals and other catalysts of $NO_x$ reported for the reactions $NO/C_2H_5OH/O_2$ and $NO/C_2H_5OH/H_2/O_2$ are as follows:

- Catalysts based on noble metals have a high cost and limited availability of the noble metal. However, the cost of silver is much lower compared to noble metals (e.g., platinum) and thus the cost of this catalytic system can be substantially reduced.
- Moreover, owing to the high activity of the new catalyst $Ag/25\%MgO-25\%CeO_2-Al_2O_3$ (Table 1) much lower silver contents can be used (e.g., 0.1 %wt) instead of higher metal content (e.g. 1-5 wt%) normally used in industrial $NO_x$ applications. So, the cost of this catalytic system can be further reduced.
- In spite of the fact that catalysts based on silver metal are less prone to becoming deactivated in the presence of water and/or $SO_2$ [38, 40], such catalysts have not been reported to be stable enough in the presence of water and/or $SO_2$ in the reaction $NO/C_2H_5OH/O_2$ under $NO_x$ oxidation conditions. Nevertheless, the new catalyst $Ag/25\%MgO-25\%CeO_2-Al_2O_3$ is very stable in the presence of 5 %vol water and 50 ppm $SO_2$ (Example 7, Fig. 6).
- Metal oxide catalysts present high selectivity levels to $N_2$ in the reaction $NO/C_2H_5OH/O_2$, similar to those obtained with the new catalyst $Ag/25\%MgO-25\%CeO_2-Al_2O_3$. Nevertheless, oxide catalysts are much less active when compared with the latter metal catalyst. Also, metal oxide catalysts are active only at temperatures higher than 450 °C while the catalyst $Ag/25\%MgO-25\%CeO_2-Al_2O_3$ presents a significant activity at 200 °C. So, metal oxide catalysts cannot be regarded as candidates for $NO_x$ applications under low temperature oxidation conditions.
- Zeolites exchanged with metallic ions are very active and selective for the SCR of NO with hydrocarbons at relatively low temperatures. Nevertheless, these catalysts present a very narrow operating temperature range of operation compared to the new catalyst $Ag/25\%MgO-25\%ceO_2-Al_2O_3$-Moreover, the activity of catalysts exchanged with metallic ions falls sharply in the presence of water and/or $SO_2$, while the new catalyst $Ag/25\%MgO-25\%CeO_2-Al_2O_3$ remains stable in the presence of water and $SO_2$.
- The new catalyst $Ag/25\%MgO-25\%CeO_2-Al_2O_3$ is the most active, selective and stable reported to date for the reaction $NO/C_2H_5OH/O_2$ under $NO_x$ oxidation conditions. Also, this catalyst presents a broad window of operating temperatures for the said reaction (Example 4, Table 1).
- $NH_3$-SCR is widely used as anti-contamination technology for the elimination of NO from stationary sources, mainly in conventional thermal power stations [1]. On the other hand, the problems of toxicity and handling of ammonia [1,4] constitute major obstacles against the use of this technology by the general public. In addition, problems related

with $NH_3$ corrosion and poisoning of catalysts by $SO_2$ seem difficult to solve. Yet, an SCR technology for $NO_x$ based on ethanol (ethanol-SCR) or ethanol and hydrogen can eliminate most of the problems that have been enumerated.

- Ethanol (or bio-ethanol) and hydrogen are widely used in industry [43-48, 54-66]. In fact, the availability of both ethanol and hydrogen in industry is much greater compared to that of ammonia [66].

The differences discussed above mean that ethanol-SCR catalytic technology for $NO_x$ of the present invention is new and innovative.

**EXAMPLE OF EMBODIMENT OF THE INVENTION**

The following examples represent a more detailed description of the invention. There can be no doubt that this detailed description is made by way of illustration only and does not limit the extent of the invention since there are many variations that can be made to it without detracting from the spirit of this invention.

**Example 1**

This example illustrates the synthesis of silver-based catalysts, supported on a $MgO$-$CeO_2$-$Al_2O_3$ mixed oxide. Sulphated $Ag/Mg$-$CeO_2$-$Al_2O_3$ catalysts were prepared by means of the damp impregnation method as follows:

0.5 g of MgO (Aldrich 529699, 99.999%), 0.5 g of $CeO_2$ (Aldrich 211575, 99.9%) and 1 g of $Al_2O_3$ (Aldrich 319767, 99.9%) were impregnated with an aqueous solution containing the desired quantity of silver nitrate (Aldrich, 319449). The excess of water was evaporated with continuous stirring and the residue was dried at 80 °C for 24 h. The dry residue was sieved and heated at 600 °C in a flow of air for at least 2 h in order to completely decompose the silver precursor. The catalyst was then reduced in a flow of $H_2$ at 300 °C for at least 2 h. 2 g of the supported catalyst were then impregnated with 50 ml of an aqueous solution containing 5 mg (38 $\mu$mols) of $(NH_4)_2SO_4$ (Aldrich, ultra-pure). The water was then evaporated with continuous stirring and the residue was dried at 100 °C for 4 h. The residue was sieved and heated in air at 400 °C for 2 h and then cooled to room temperature. Hereinafter, the catalyst described above will be known as s-$Ag/MgO$-$CeO_2$-$Al_2O_3$ where s indicates the $Ag/MgO$-$CeO_2$-$Al_2O_3$ catalyst.

The dispersion of silver in the $Ag/MgO$-$CeO_2$-$Al_2O_3$ catalysts was measured by means of $H_2$ chemisorption at 25 °C following by thermal programmed desorption (TPD) in a He flow. Prior to the TPD of the $H_2$, the sample was purged in He for 45 min at room temperature. A dispersion of silver of 85% in the 0.1 %wt $Ag/MgO$-$CeO_2Al_2O_3$ catalyst was determined.

**Example 2**

The integral nitrogen production velocities were determined for the reaction on silver supported catalysts in the range 200-400 °C as follows:

300 mg of sample of catalyst were placed in a fixed bed quartz micro-reactor. The reactor supply consisted of 0.05 %vol NO, 0.1 %vol ethanol, 5 %vol $O_2$, 5%vol $H_2O$ and 89.85 %vol He. A flow velocity of 100 ml(STP)/min was used giving a GHSV of approximately 40,000 $h^{-1}$. Figure 1 shows the effect of the chemical composition of the support on the production velocity of $N_2$ per gram of catalyst obtained during the reaction $NO/C_2H_5OH/O_2$ at 250 and 300 °C. It can be clearly seen in Fig. 1 a that the Ag catalysts supported on $Al_2O_3$, $CeO_2$ and MgO present the higher $N_2$ production velocities at the two stated temperatures. In addition, the $Ag/CeO_2$ catalyst showed the highest selectivity values towards $CO_2$ compared to the rest of the catalysts presented in Fig. 1 a.

Based on the results of Fig. 1a, two more catalysts were prepared where Ag was supported on the mixed metal oxides $MgO$-$CeO_2$ and $MgO$-$CeO_2$-$Al_2O_3$. Fig. 1b compares the production velocity of $N_2$ per gram of catalyst obtained over the latter catalysts with that obtained on three catalytic phases of $Ag/CeO_2$, $Ag/MgO$ and $Ag/Al_2O_3$.

Equation [1] permits the reaction velocity ($R_m$) to be calculated for the three catalytic phases of $Ag/CeO_2$, $Ag/MgO$ and $Ag/Al_2O_3$ based on the individual velocities of each catalytic phase and the content (wt%) of the phase in the mixture. If there does not exist any cooperation (synergy) between the two phases, then the experimental reaction velocity observed on the mixture of the two solids must also be predicted by Eq. [1]. As can be seen in Fig. 1b, the catalysts with the mixed metal oxide supports present higher velocities than those predicted by the rule of mixture (Eq. [1]) at 250 and 300 °C. So, a positive synergetic effect is produced. The case of the catalyst 1 %wt $Ag/25\%MgO$-$25\%CeO_2$-$Al_2O_3$ can be stated, which presents a positive synergetic effect at both temperatures.

$$R_m = (x/100).R_{MgO} + (y/100) . R_{CeO2} + (1-(x+y)/100) . R_{Al2O3} (\mu mols/g.s) \quad [1]$$

where,
x and y is the content (wt%) of MgO and $CeO_2$ in the mixed oxide support.

**Example 3**

In this example, the influence of the silver content on the integral $N_2$ production velocity was investigated in the range 200-400 ˚C on the system Ag/25%MgO-25%$CeO_2$-$Al_2O_3$.

The supply consisted of 0.05 %vol NO, 0.1 %vol ethanol, 5 %vol $O_2$, 5%vol $H_2O$ and He. 300 mg of each sample was used for these experiments, while the total flow velocity was kept at 100 ml(STP)/min giving a GHSV of approximately 40,000 h$^{-1}$. Figure 2 presents the integral $N_2$ production velocities per gram of total silver on the sample as a function of temperature for five silver contents: 0.1, 0.5, 1, 2, 3 and 5 %wt. As can be seen in Fig. 2, the $N_2$ production velocity falls drastically with the increase in silver content at any temperature in the range 200-400 ˚C. So, it can be said that the reduction of NO with ethanol in the presence of excess $O_2$ on the catalytic system Ag/25%MgO-25%$CeO_2$-$Al_2O_3$ is favoured at low silver contents.

Table 1 below compiles the catalytic behaviour of various metal supported catalysts for the reaction NO/$C_2H_5$OH/$O_2$ under $NO_x$ oxidation conditions reported in the open literature. The corresponding results obtained with the catalyst 0.1 %wt Ag/25%MgO-25%$CeO_2$-$Al_2O_3$ for the said reaction are also included in Table 1. In this table, $\Delta T$ is the temperature range wherein $X_{NO}$ is greater than 1/2 of the maximum observed conversion of NO. The latter parameter could be used for defining the quality of the operation temperature window. For example, a high value of $\Delta T$ corresponds to the best desired operation of the catalyst under practical conditions. Table 1 also compiles the integral $N_2$ production velocity per gram of total metal ($R_{N2}$) evaluated in accordance with the obtained values of $X_{NO}$ and $S_{N2}$ for each catalyst.

In accordance with the results of Table 1, the present catalyst 0.1 %wt Ag/25%MgO-25%$CeO_2$-$Al_2O_3$ is the best in terms of catalytic behaviour of all the tabulated catalysts. Since the reaction orders with respect to the three reactants must not be greater than 1.5, it is evident from the data of Table 1 that the catalyst 0.1 %wt Ag/25%MgO-25%$CeO_2$-$Al_2O_3$ presents the highest activity, selectivity (towards $N_2$ and $CO_2$) and operation temperature window ($\Delta T$) ever reported for the reaction NO/$C_2H_5$OH/$O_2$. Nevertheless, the comparison between the catalysts Ag/25%MgO-25%$CeO_2$-$Al_2O_3$, Ag/$Al_2O_3$ and Ag/$SiO_2$ is direct when the same experimental conditions are used. The conversion of NO increases by approximately 50 % when the Ag is supported on 25%MgO-25%$CeO_2$-$Al_2O_3$ with respect to the support $Al_2O_3$, while the increase becomes larger (Table 1) if the comparison is made with the support $SiO_2$. Also, the value of selectivity to $N_2$ and $CO_2$ of 99.0 % obtained with the catalyst Ag/25%MgO-25%$CeO_2$-$Al_2O_3$ is much greater than that obtained with the rest of the catalysts reported in Table 1. The fact must also be added that the operation temperature window with the catalyst Ag/MgO-$CeO_2$-$Al_2O_3$ ($\Delta T$ = 200 ˚C) is, as far as we know, the highest value ever reported over metal supported catalysts for the reaction NO/$C_2H_5$OH/$O_2$ with 5 % $H_2O$ in the supply stream.

**Example 4**

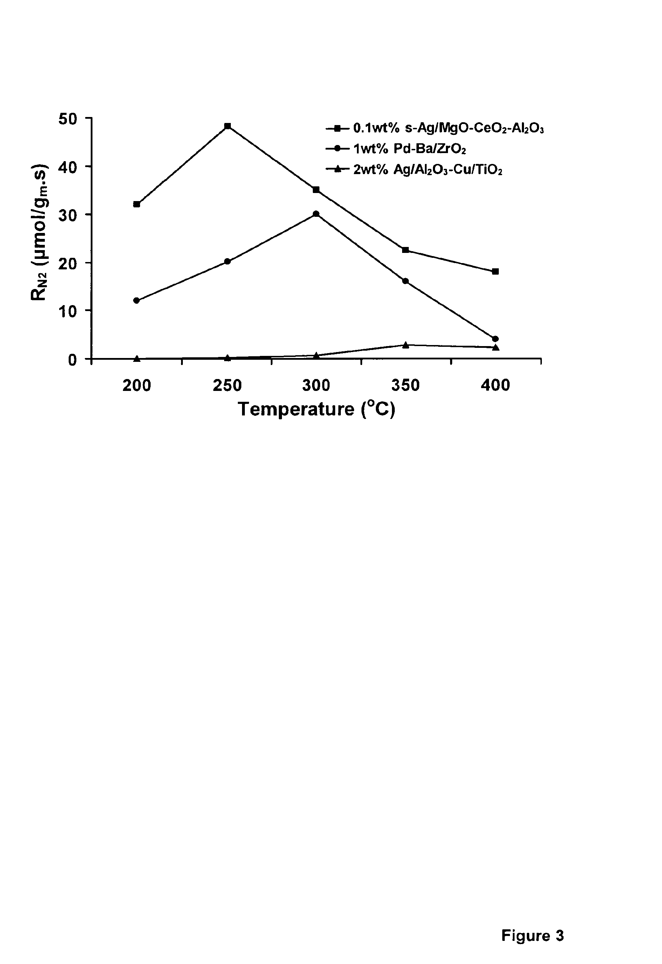

This example compares the activity (in terms of integral $N_2$ production velocities per gram of metal, $R_{N2}$) of the catalysts 0.1 %wt s-Ag/25%MgO-25%$CeO_2$-$Al_2O_3$ (■), 1.0 %wt Pd-Ba/$ZrO_2$ (●) [34] and 2.0 %wt Ag/$Al_2O_3$-Cu/$TiO_2$ (▲) [37], which are the best catalysts reported in the literature for the reaction NO/$C_2H_5$OH/$O_2$ under $NO_x$ oxidation conditions in the range 200-400 ˚C. The results indicate that the catalyst 0.1 %wt s-Ag/25%MgO-25%$CeO_2$-$Al_2O_3$ has a higher activity than any other reported to date for the reaction NO/$C_2H_5$OH/$O_2$. As shown in Fig. 3, all the catalysts present maximum values of $N_2$ production velocities ($R_{N2,max}$) in the range 250-350 ˚C. Nevertheless, the catalyst 0.1 %wt s-Ag/25%MgO-25%$CeO_2$-$Al_2O_3$ shows significantly higher $N_2$ production velocities than the catalysts 1.0 %wt Pd-Ba/$ZrO_2$ and 2.0 %wt Ag/$Al_2O_3$-Cu/$TiO_2$ at all temperatures in the range 200-400 ˚C. As is clearly shown in Fig. 3 and in Table 1, the catalyst 0.1 %wt s-Ag/25%MgO-25%$CeO_2$-$Al_2O_3$ presents values of AT two times higher than those observed with the catalysts 1.0 %wt Pd-Ba/$ZrO_2$ and 2.0 %wt Ag/$Al_2O_3$-C/$TiO_2$ (see Table 1). It can be seen that the catalyst 2.0 %wt Ag/$Al_2O_3$-Cu/$TiO_2$ exhibits virtually zero activity at temperatures lower than 300 ˚C. The value of $\Delta T$ obtained with the catalyst 0.1 %wt s-Ag/25%MgO-25%$CeO_2$-$Al_2O_3$ is the highest of all those reported in the literature in the range 200-400 ˚C (Table 1).

**Table 1:** Catalytic activity of various metal supported catalysts for the reaction $NO/C_2H_5OH/O_2$ in the temperature range 200-400 °C

| Catalyst | Reaction Conditions | | | $\Delta T$ (°C)[a] | $R_{N2}$[b] ($\mu mol/s.g_m$) | $T_{max}$[c] (°C) | $X_{NO,max}$ (%) | $S_{N2}$ (%) (at $X_{NO,max}$) | $S_{CO2}$ (at $X_{NO,max}$) | $X_{NO}$ (%) (at 200°C) | $S_{N2}$ (%) (at 200°C) | Ref. |
|---|---|---|---|---|---|---|---|---|---|---|---|---|
| | NO (%) | $C_2H_5OH$ (%) | $O_2$ (%) | | | | | | | | | |
| 1% Pd-Ba/ZrO$_2$ | 0.6 | 0.4 | 0.8[d] | 80 | 20.1 | 250 | 10 | 38 | 79 | - | - | [34] |
| 1% Pt/Al$_2$O$_3$ | 0.08 | 0.05 | 5.0[e] | 150 | 0.8 | 250 | 25 | ~70 | - | 21 | <70 | [33] |
| 2% Ag/Al$_2$O$_3$-Cu/TiO$_2$ | 0.1 | 0.125 | 10.0 | 100 | 2.7 | 400 | 90 | 90 | <80 | 0 | - | [37] |
| 2% Ag/Al$_2$O$_3$ | 0.1 | 0.125 | 10.0 | 120 | 2.3 | 400 | 95 | 74 | <50 | 0 | - | |
| Feo $_9$Si$\beta$ | 0.1 | 0.1 | 2.0 | 230 | 0.9 | 275 | 70 | 85 | 30 | 40 | 55 | [42] |
| 0.1% Ag/SiO$_2$ | 0.05 | 0.1 | 5.0[e] | - | 17.0 | 400 | <35 | 90 | <20 | 0 | - | |
| 0. 1 % Ag/Al$_2$O$_3$ | 0.05 | 0.1 | 5.0[e] | 120 | 31.1 | 300 | 59 | 89 | 67 | 1 | 67 | |
| 0.1% Ag/MgO-CeO$_2$-Al$_2$O$_3$[f] | 0.05 | 0.1 | 5.0[e] | 200 | 48.1 | 250 | 90 | 99 | 99 | 62 | 96 | |

[a] $\Delta T$: Temperature range where $X_{NO} > X_{NOmax}/2$,
[b] maximum velocity of formation of $N_2$ (per gram of active metal),
[c] Temperature at which the maximum conversion of NO is measured.
[d] 10% $H_2O$ is present in the supply,
[e] 5% $H_2O$ is present in the supply,
[f] sulphated catalyst.

EP 2 468 399 A1

**Example 5**

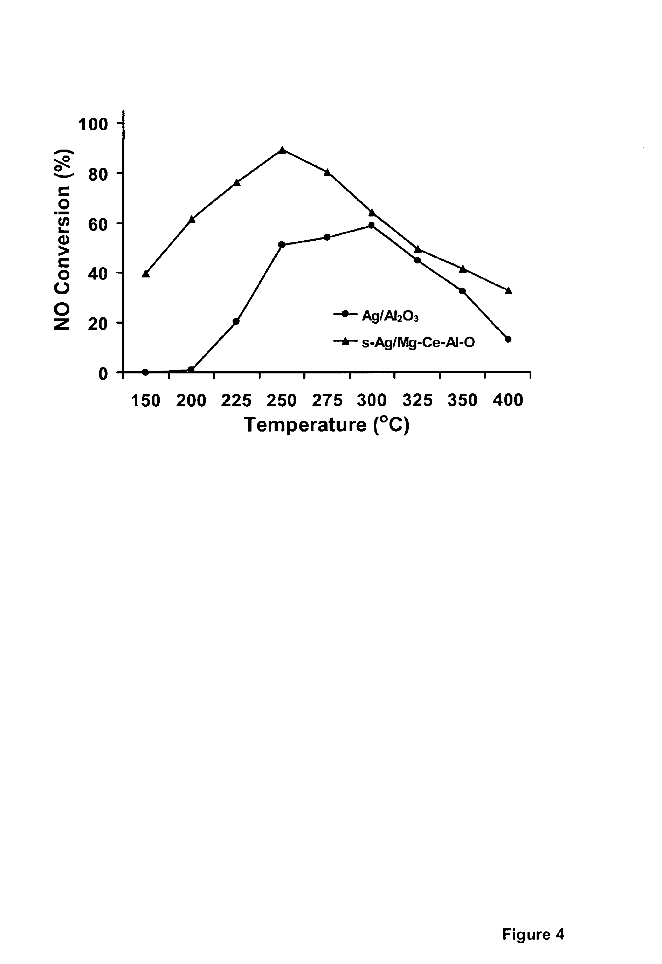

This example compares the activity (in terms of NO conversion, $X_{NO}$) of the catalysts 0.1 %wt s-Ag/25%MgO-25%CeO$_2$-Al$_2$O$_3$ (▲) and 0.1 %wt Ag/Al$_2$O$_3$ (●) for the reaction NO/C$_2$H$_s$OH/O$_2$ under NO$_x$ oxidation conditions with 5 %vol H$_2$O in the supply and in the range 150-400 ˚C. The results indicate that the catalyst s-Ag/25%MgO-25%CeO$_2$-Al$_2$O$_3$ has a significantly higher activity than Ag/Al$_2$O$_3$ for the reaction NO/C$_2$H$_5$OH/O$_2$. 300 mg of each catalyst were used and the supply consisted of 0.05 %vol NO, 0.1 %vol C$_2$H$_5$OH, 5 %vol O$_2$, 5 %vol H$_2$O and 89.85 %vol He. A flow velocity of 100 ml(STP)/min was used giving a GHSV of approximately 40,000 h$^{-1}$. As shown in Fig. 4, the catalyst s-Ag/25%MgO-25%CeO$_2$-Al$_2$O$_3$ shows significantly higher NO conversion values than Ag/Al$_2$O$_3$ at all temperatures in the range 150-400 ˚C. Moreover, it is noted that at reaction temperatures lower than 250 ˚C the Ag/Al$_2$O$_3$ catalyst appears to be practical inactive, while the catalyst sAg/25%MgO-25%CeO$_2$-Al$_2$O$_3$ presents significant activity. In addition, the catalyst s-Ag/25%MgO-25%CeO$_2$-Al$_2$O$_3$ presents a much broader temperature window of operation ($\Delta$T, see Table 1) compared to Ag/Al$_2$O$_3$ for the reaction NO/C$_2$H$_5$OH/O$_2$ under NO$_x$ oxidation conditions.

**Example 6**

This example compares the selectivity to N$_2$ (S$_{N2}$) and CO$_2$ (S$_{CO2}$) of the reaction NO/C$_2$H$_5$OH/O$_2$ under NO$_x$ oxidation conditions as a function of temperature and in the range 150-400 ˚C obtained with the catalysts 0.1 %wt 0.1 %wt s-Ag/25%MgO-25%CeO$_2$-Al$_2$O$_3$ (▲) and 0.1 %wt Ag/Al$_2$O$_3$ (●). The experimental reaction conditions used in this example are the same as those used in example 5.

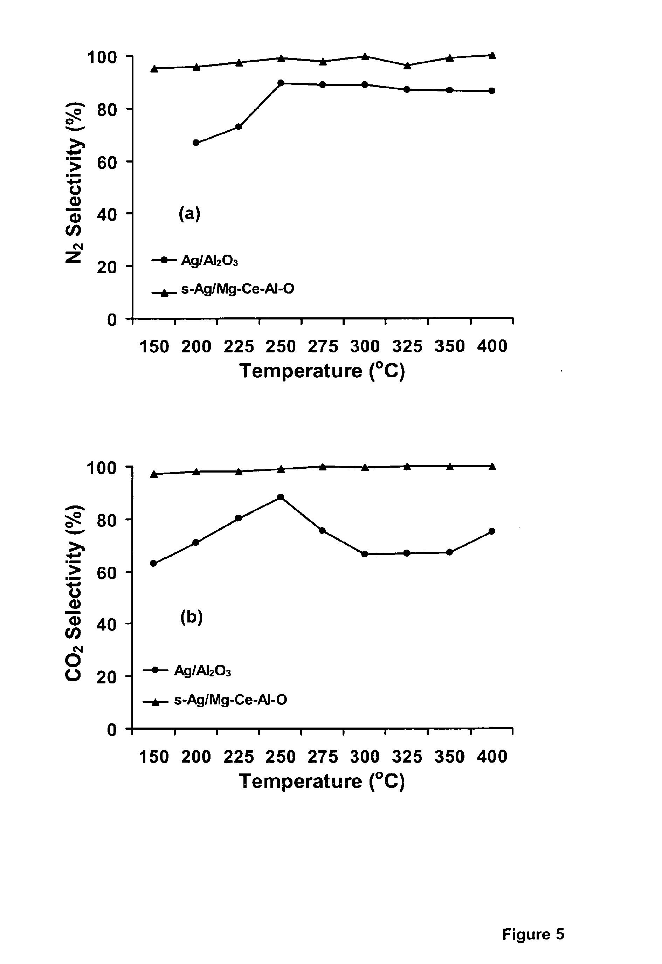

As shown in Fig. 5a, the catalyst s-Ag/MgO-CeO$_2$-Al$_2$O$_3$ presents high values of selectivity to N$_2$ in the range 150-400 ˚C. In particular, in the range 150-250 ˚C the catalyst s-Ag/MgO-CeO$_2$-Al$_2$O$_3$ shows values of selectivity to N$_2$ between 95 and 99 %, while the catalyst Ag/Al$_2$O$_3$ presents values of $S_{N2}$ in the range 67-89 %. In the range 250-400 ˚C, the selectivity to N$_2$ is constantly higher than 99% with the catalysts s-Ag/MgO-CeO$_2$-Al$_2$O$_3$, while it is lower than 89% with the catalyst Ag/Al$_2$O$_3$.

Moreover, as clearly seen in Fig. 5b, the catalyst s-Ag/MgO-CeO$_2$-Al$_2$O$_3$ also presents very high selectivity values towards CO$_2$ in the range 150-400 ˚C. In particular, the latter catalyst shows selectivity values to CO$_2$ exceeding 97% at all reaction temperatures examined while, a practically complete conversion of ethanol to CO$_2$ (100% selectivity towards CO$_2$) is obtained at reaction temperatures above 250 ˚C. On the contrary, the Ag/Al$_2$O$_3$ catalyst shows selectivity values towards CO$_2$ lower than 88% in the range 150-400 ˚C, while a complete conversion of ethanol to CO$_2$ is obtained only at temperatures higher than 400 ˚C.

**Example 7**

In this example, the stability of the catalyst 0.1 %wt Ag/25%MgO-25%CeO$_2$-Al$_2$O$_3$ for the reaction NO/C$_2$H$_5$OH/O$_2$ in NO$_x$ oxidation conditions in the presence of SO$_2$ in the supply is studied. The sulphur dioxide is one of the known poisons of many NO$_x$ catalysts [28].

The reaction NO/C$_2$H$_5$OH/O$_2$/SO$_2$ is studied at 200 ˚C using 300 mg of the catalyst 0.1 %wt Ag/25%MgO-25%CeO$_2$-Al$_2$O$_3$ and a composition of the supply of 0.05 %vol NO, 0.1 %vol C$_2$H$_5$OH, 5 %vol O$_2$, 5% H$_2$O, 50 ppm SO$_2$ and 89.85 %vol He. A flow velocity of 100 ml(STP)/min was used, which is equivalent to a GHSV of approximately 40,000 h$^{-1}$. Figure 6 presents the NO conversion, N$_2$ selectivity and CO$_2$ selectivity profiles with the time in the stream at 200 ˚C on the catalyst 0.1 %wt Ag/25%MgO-25%CeO$_2$-Al$_2$O$_3$. As can be seen, the catalyst Ag/MgO-CeO$_2$-Al$_2$O$_3$ presents a large increase (~80% increase) in NO conversion during the first 4 hours in current, while at the same time showing a practically constant NO conversion after the first 4 hours for a total time in stream of 48 h. Moreover, as it is seen in Fig. 6, the Ag/MgO-CeO$_2$-Al$_2$O$_3$ catalyst presents remarkable selectivity values towards N$_2$ and CO$_2$ of about 99%. This is a result of excellent stability and of industrial importance since no stable catalysts in the reaction NO/C$_2$H$_5$OH/O$_2$ in the presence of significant concentrations of SO$_2$ have been reported at low temperatures (e.g., 200˚C). It is stated here that the concentration of SO$_2$ in many industrial currents lies in the range 5-50 ppm. So, the catalyst 0.1 %wt Ag/25%MgO-25%CeO$_2$-Al$_2$O$_3$ can find practical applications even in cases of maximum SO$_2$ concentrations present in combustion streams.

**Example 8**

This example shows the effect of the addition of hydrogen in the feed on the temperature profile of the integral production velocity of N$_2$ in the reaction NO/C$_2$H$_5$OH/O$_2$ under NO$_x$ oxidation conditions on the catalyst 0.1 %wt s-Ag/MgO-CeO$_2$-Al$_2$O$_3$. The experimental reaction conditions used in this example are the same as in Example 3. Figure 7 presents the temperature profiles of the N$_2$ production velocity obtained with the catalyst 0.1 %wt s-Ag/MgO-CeO$_2$-Al$_2$O$_3$ for the reaction NO/C$_2$H$_5$OH/O$_2$ and using hydrogen at a concentration of 2000 ppm. As shown in Fig. 7, the integral

production velocity of $N_2$ substantially improves for all reaction temperatures when the $H_2$ is present in the feed. In particular, an increase of 20-30% is obtained at 150 and 200 ˚C, when 2000 ppm of hydrogen is supplied in the feed. However, it should be noted that the selectivity of the reaction towards both $N_2$ and $CO_2$ decreases significantly (10-20 percentage units) when 2000 ppm of $H_2$ is added in the feed of $NO/C_2H_5OH/O_2$ and at reaction temperatures between 150 and 300 ˚C.

**Example 9**

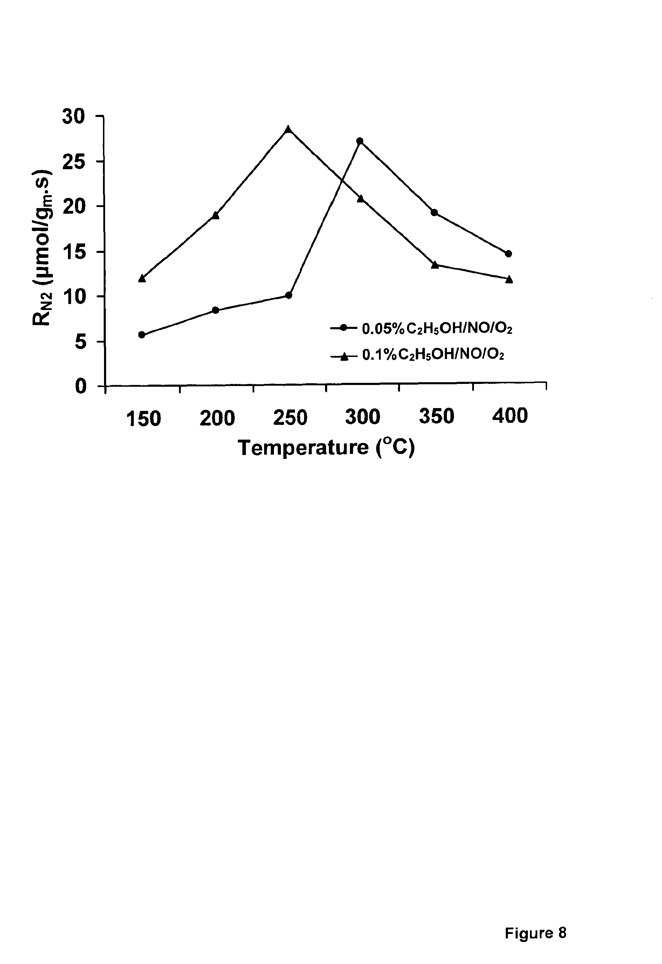

This example shows the effect of the of the partial pressure of ethanol in the feed on the temperature profile of the integral production velocity of $N_2$ in the reaction $NO/C_2H_5OH/O_2$ under $NO_x$ oxidation conditions on the catalyst 0.1 %wt s-Ag/MgO-$CeO_2$-$Al_2O_3$. The experimental reaction conditions used in this example are the same as in Example 3. Figure 8 compares the temperature profiles of the $N_2$ production velocity obtained with the catalyst 0.1 %wt s-Ag/MgO-$CeO_2$-$Al_2O_3$ for the reaction $NO/C_2H_5OH/O_2$ using two different feed concentrations of ethanol, 500 and 1000 ppm. As shown in Fig. 8, the integral production velocity of $N_2$ substantially improves for low reaction temperatures when the concentration of ethanol in the feed is increased from 500 to 1000 ppm. In particular, an increase of two and three times is obtained at 150 and 250 ˚C respectively, when 1000 ppm of ethanol is used in the feed. However, the opposite behaviour is observed at reaction temperatures higher than 250 ˚C, where slightly lower production velocities of $N_2$ are obtained with the higher ethanol concentration in the feed. This is a result of great importance, since at low temperatures, with the regulation of ethanol concentration in the feed, the quantity of catalyst can be regulated towards a minimum cost and desirable $N_2$ and $CO_2$ production yields. Moreover, when the availability of ethanol is the limiting factor, high $N_2$ production yields can be obtained by increasing the temperature of the ethanol-SCR process.

**BRIEF DESCRIPTION OF THE FIGURES**

Figure 1 presents the integral production velocities of $N_2$ per gram of catalyst as a function of the support chemical composition in catalysts 1.0 %wt Ag/support, obtained during the reaction $NO/C_2H_5OH/O_2$ at 250 ˚C and 300 ˚C. Reaction conditions $C_2H_5OH$ = 0.1 %, NO = 0.05 %, $O_2$ = 5 %, W = 0.3 g, GHSV = 40,000 h$^{-1}$, $P_{tot}$ =1.0 bar.

Figure 2 shows the influence of the content of Ag metal (%wt) on the integral production velocities of $N_2$ (per gram of Ag) during the reaction $NO/C_2H_5OH/O_2$ under $NO_x$ oxidation conditions on the catalysts x %wt Ag/25%MgO-25%$CeO_2$-$Al_2O_3$ in the range 200-400 ˚C. Reaction conditions $C_2H_5OH$ = 0.1 %, NO = 0.05 %, $O_2$ = 5 %, W = 0.3 g, GHSV = 40,000 h$^{-1}$, $P_{tot}$ = 1.0 bar.

Figure 3 compares the integral production velocities of $N_2$ (per gram of metal) during the reaction $NO/C_2H_5OH/O_2$ under $NO_x$ oxidation conditions on the catalysts 0.1 %wt s-Ag/25%MgO-25%$CeO_2$-$Al_2O_3$ (■), 1 %wt Pd-Ba/$ZrO_2$ (●) [34] and 2 %wt Ag/$Al_2O_3$-Cu/$TiO_2$ (▲) [37].

Figure 4 compares the NO conversion temperature profiles ($X_{NO}$) of the reaction $NO/C_2H_5OH/O_2$ under $NO_x$ oxidation conditions on the catalysts 0.1 %wt s-Ag/25%MgO-25%$CeO_2$-$Al_2O_3$ (▲) and 0.1 %wt Ag/$Al_2O_3$ (●). Reaction conditions $C_2H_5OH$ = 0.1 %, NO = 0.05 %, $O_2$ = 5 %, $H_2O$ = 5 %, W = 0.3 g, GHSV = 40,000 h$^{-1}$, $P_{tot}$ = 1.0 bar.

Figure 5 compares the temperature profiles of nitrogen selectivity ($S_{N2}$, Fig. 5a) and $CO_2$ selectivity ($S_{CO2}$, Fig. 5b) of the reaction NO/ $C_2H_5OH/O_2$ under $NO_x$ oxidation conditions on the catalysts 0.1 %wt s-Ag/25%MgO-25%$CeO_2$-$Al_2O_3$ (▲) and 0.1 %wt Ag/$Al_2O_3$ (●). Reaction conditions $C_2H_5OH$ = 0.1 %, NO = 0.05 %, $O_2$ = 5 %, $H_2O$ = 5 %, W = 0.3 g, GHSV = 40,000 h$^{-1}$. $P_{tot}$ = 1.0 bar.

Figure 6 shows the stability of the catalyst 0.1 %wt s-Ag/25%MgO-25%$CeO_2$-$Al_2O_3$ with time on stream, in terms of NO conversion (●) and $N_2$ (■) and $CO_2$ (▲) selectivity. Reaction conditions $C_2H_5OH$ = 0.1 %, NO = 0.05 %, $O_2$ = 5 %, $H_2O$ = 5 %, $SO_2$ = 50 ppm, W = 0.15 g, GHSV = 40,000 h$^{-1}$, $P_{tot}$ = 1.0 bar, T=200˚C.

Figure 7 presents the effect of the presence of hydrogen in the feed on the integral production velocity of $N_2$ compared to the temperature for the reaction $NO/C_2H_5OH/O_2$ under $NO_x$ oxidation conditions at a total pressure of 1 bar on the catalyst 0.1 %wt s-Ag/25%MgO-25%$CeO_2$-$Al_2O_3$. Reaction conditions $C_2H_5OH$ = 0.1 %, NO = 0.05 %, $O_2$ = 5 %, W = 0.30 g, GHSV = 40,000 h$^{-1}$ (●), and $C_2H_5OH$ = 0.1 %, $H_2$ = 0.2 %, NO = 0.05 %, $O_2$ = 5 %, W = 0.30 g, GHSV = 40,000 h$^{-1}$ (■).

Figure 8 presents the effect of the partial pressure of ethanol on the integral production velocity of $N_2$ compared to the temperature for the reaction $NO/C_2H_5OH/O_2$ under $NO_x$ oxidation conditions at a total pressure of 1 bar on the catalyst 0.1 %wt s-Ag/25%MgO-25%CeO$_2$-Al$_2$O$_3$. Reaction conditions $C_2H_5OH$ = 0.1 %, NO = 0.05 %, $O_2$ = 5 %, W = 0.30 g, GHSV = 40,000 h$^{-1}$ (●), and $C_2H_5OH$ = 0.05 %, NO = 0.05 %, $O_2$ = 5 %, W = 0.30 g, GHSV = 40,000 h$^{-1}$ (■).

**Cited bibliography**

1. G. Busca, L. Lietti, G. Ramis and F. Berti, Appl. Catal. B 18 (1998) 1.
2. C. J. Pereria and K.W. Phumlee, Catal. Today 13 (1992) 23.
3. A. Fritz and V. Pitchon, Appl. Catal. B 13 (1997) 1.
4. T. A. Hewson, Jr., and J.B. Stamberg, Energy ventures analysis, The Center for Energy and Economic Development, Midwest Ozone Group, November 1995.
5. R.I. Pusateri, J.R. Katzer and W.H. Monaque, AICHE J. 20 (1974) 219.
6. B. Frank, G. Emig and A. Renken, Appl. Catal. B: Envir. 19 (1998) 45.
7. R. Burch, M.D. Coleman, Appl. Catal. B. Envir. 23 (1999) 115.
8. A. Ueda, T. Nakao, M. Azuma and T. Kobayashi, Catal. Today 45 (1998) 135.
9. K. Yokota, M. Fukui and T. Tanaka, Appl. Surf. Sci 121/122 (1997) 273.
10. M. Machida, S. Ikeda, D. Kurogi and T. Kijima, Appl. Catal. B: Envir. 35 (2001) 107.
11. R. Burch, P.J. Millington and A.P. Walker Appl. Catal B. Envir. 4 (1994) 160.
12. M. Fukui and K. Yokata, Shokubai, Catalysts and Catalysis 36 (1994) 160.
13. C.N. Costa, V.N. Stathopoulos, V.C. Belessi and A.M. Efstathiou, J. Catal. 197 (2001) 350.
14. C.N. Costa and A.M. Efstathiou, Appl. Catal. B: Environmental 72 (2006) 241.
15. A.M. Efstahiou, C.N. Costa and J.L.G. Fiero, European Patent No. EP 1475149.
16. A.M. Efstahiou, C.N. Costa and J.L.G. Fiero, United States Patent No. US 0090393.
17. T. Tabata, M. Kokitsu and O. Okada, Catal. Today 22 (1994) 147.
18. V.1. Parvulescu, P. Grange and B. Delmon, Catal. Today 46 (1998) 233.
19. A. Obuchi, A. Ohi, M. Nakamura, A. Ogata, K. Mizuno and H. Ohuchi, Appl. Catal. B 2 (1993) 71.
20. R. Burch, P.J. Millington and A.P. Walker, Appl. Catal. B 4 (1995) 65.
21. D.K. Captain, K.L. Roberts and M.D. Amiridis, Catal.Today 42 (1998) 65.
22. R. Burch, J.A.Sullivan and T.C. Watling, Catal. Today 42 (1998) 13.
23. R. Burch and A. Ramli, Appl. Catal. B 15 (1998) 63.
24. M.D. Amiridis, K..L. Roberts and C.J. Perreria, Appl. Catal. B 14 (1997) 203.
25. G.R. Bamwenda, A. Ogata, A. Obuchi, J. Oi, K. Mizuno and J. Skrzypek, Appl. Catal. B 2 (1993) 71.
26. E.A. Efthimiades, S.C. Christoforou, A.A. Nikolopoulos and I.A. Vasalos, Appl. Catal. B: Envir. 22 (1999) 91.
27. E. Seker, J. Cavatio, E. Gulari, P. Lorpongpaiboon and S. Osuwan, Appl. Catal. A 183 (1999) 121.
28. H. Hirabayashi, H. Yahiro, N. Mizuno and M. Iwamoto, Chem. Lett. (1992) 2235.
29. G. Zhang, T. Yamaguchi, H. Kawakami and T. Suzuki, Appl. Catal. B: Envir. 1 (1992) L1519.
30. A. Obuchi, A. Ohi, M. Nakamura, A, Ogata, K. Mizuno and H. Ohuchi, Appl. Catal. B: Envir. 2 (1993) 71.
31. W. Grunert et al., Chem. Tech. 47 (1995) 205.
32. F.J. Janssen, in G. Ertl, H. Knözinger and J. Weitkamp (Eds.), Handbook of Heterogeneous Catalysis, VCH, Weinheim, (1997) p. 1633.
33. E. Joubert, X. Courtois, P. Marecot and D. Duprez, Appl. Catal. B : Envir. 64 (2006) 103.
34. F.T. Vieira, M.A.S. Baldanza and M. Schmal, Catal. Today 149 (2010) 304.
35. L.F. de Mello, F.B. Noronha and M. Schmal, J. Catal. 220 (2003) 358.
36. L.F. de Mello, M.A.S. Baldanza, F.B. Noronha and M. Schmal, Catal. Today 85 (2003) 3.
37. T. Miyadera, Appl. Catal. B: Envir. 16 (1998) 155.
38. R. da Silva, R. Cataluna and A. Martínez-Arias, Catal. Today 143 (2009) 242.
39. Y.H. Yeom, M. Li, W.M.H. Sachtler and E. Weitz, J. Catal. 246 (2007) 413.
40. J.H. Lee, S.J. Schmieg and Se. H, Oh, Appl. Catal. A: General 342 (2008) 78.
41. M. Boutros, J.-M. Trichard and P. Da Costa, Appl. Catal. B: Envir. 91 (2009) 640.
42. S. Dzwigaj, J. Janas, T. Machej and M. Che, Catal. Today 119 (2007) 133.
43. M.G. Russell, Clin. Microbiol. Rev. 12 (1) (1999) 147.
44. J. Goettemoeller and A. Goettemoeller, Sustainable Ethanol: Biofuels, Biorefineries, Cellulosic Biomass, Flex-fuel Vehicles, and Sustainable Farming for Energy Independence, Prairie Oak Publishing, (2007).
45. J.M. Appel, Physicians are not Bootleggers: The short, peculiar life of the medicinal alcohol movement, Bulletin of the History of Medicine 82(2) (2008) 355.

46. B. Kamm, P.R. Gruber and M. Kamm, Biorefineries-industrial Processes and Products, Wiley, (2008).

47. A.E. Wheals, L.C. Basso, D.M.G. Alves and H.V. Amorim, Trends in Biotechnology, 17 (12) (1999), 482.

48. The Ethanol Fact Book, CFDC: Clean Fuels Development Coallition, (2007).

49. G. Centi, J. Mol. Catal. A: Chemical 173 (2001) 287.

50. B. Ramachandran, G.R. Herman, S. Choi, H.G. Stenger, C.E. Lyman and J.W. Sale, Catal. Today 55 (2000) 281.

51. R. Khodayari and C.U.I. Odenbrand, Appl. Catal. B: Envir. 33 (2001) 277.

52. K. Balakrishnan and R.D. Gonzalez, J. Catal. 144 (1993) 395.

53. S. Galvano and G. Paravano, J. Catal. 55 (1978) 178.

54. J.R. Rostrup-Nielsen, Catal. Today 18 (1993) 305.

55. I. Alstrup, J. Catal. 109 (1998) 241.

56. S.T.Ceyer, Q.Y. Yang, M.B. Lee, J.D. Beckerle and A.D. Johnson, Stud. Surf. Sci. Catal. 36 (1987) 51.

57. I. Alstrup and M.T. Travers, J. Catal. 135 (1992) 147.

58. T.B. Beebe, Jr., D.W. Goddman, B.D. Kay and T.J. Yates, Jr., J. Chem. Phys. 87 (1987) 2305.

59. I. Alstrup, I. Chorkendorff and S. Ullmann, Surf. Sci. 234 (1990) 79.

60. H.J. Topfer, Gas Wasserfach 117 (1976) 412.

61. S. Tenner, Hydrocarbon Processing 66(7) (1987) 42.

62. A.T. Ashcroft, A.K. Cheetham, M.L.H. Green and P.D.F. Vernon, Nature 352(1991)225.

63. J.T. Richardson and S.A. Paripatyadar, Appl. Catal 61 (1990) 293.

64. I.M. Bodrov and L.O. Apel'baum, Kinet. Katal. 8 (1967) 379.

65. I.M. Bodrov and L.O. Apel'baum, Kinet. Katal. 5 (1964) 696.

66. M.A. Peña, J.P. Gomez and J.L.G. Fierro, Appl. Catal. A: Chemical 144 (1996) 7.

**Claims**

1. Catalyst based on silver, with excellent activity, selectivity and stability for reducing NO to $N_2$ by means of using ethanol or an ethanol/$H_2$ mixture as reducing agent in the low temperature range 150-300 °C and in the presence of an excess of oxygen (e.g. 5% vol), 5-10% vol $H_2O$ and/or 50 ppm $SO_2$ in the supply, which consists of Ag in an amount equal or less than 1% wt highly dispersed on a mixed oxide support consisting of two or more of the oxides: Magnesia (Magnesium Oxide), Ceria (Cerium Oxide) and Alumina (Aluminum Oxide), wherein said catalyst demonstrates excellent activity ($X_{NO}$>30%) and selectivity levels to $N_2$ and $CO_2$ higher than 96% and 97%, respectively, in the broad temperature range of 150-400 °C, as well as excellent stability of the reaction in the presence of 5-10% vol $H_2O$ and 50 ppm $SO_2$ in the supply using a surface contact time of 0.09 s.

2. Catalyst in accordance with claim 1, **characterized in that** the preferred metallic content is of the order of 0.1% Ag highly dispersed on a mixed oxide support consisting of two or more of the oxides: Magnesia (Magnesium Oxide), Ceria (Cerium Oxide) and Alumina (Aluminum Oxide).

3. Catalyst in accordance with claims 1 and 2, which consists of Ag supported on a mixed oxide of 25% MgO, 25% $CeO_2$ and 50% $Al_2O_3$.

4. Catalyst in accordance with claims 1-3 wherein silver nitrate is used as metallic precursor of Ag.

5. Catalyst in accordance with claims 1-4, wherein other precursor compounds of silver are used, e.g., silver acetate, silver acetylacetonate, silver chloride, etc.

6. Catalyst in accordance with claims 1-5, where the support and/or metallic phase(s) are sulphated.

7. Catalyst for the reduction of nitric oxide with ethanol or an ethanol/hydrogen mixture in the presence of excess oxygen, in accordance with claims 1-6, further containing more than one of the following compounds: Ag, MgO, $CeO_2$, $MgSO_4$, $Ce_2(SO_4)_3$, $Ag_2O$ and $Ag_2SO_4$, and which are all possibly formed in the catalyst Ag/MgO-$CeO_2$-$Al_2O_3$ under the conditions of preparation, calcination and reaction.

8. Catalyst in accordance with claims 1-7, wherein a surface compound of magnesium is formed by interaction between the species present in the gaseous phase under the reaction conditions and an oxide of magnesium present.

9. Catalyst in accordance with claims 1-8, wherein a surface compound of cerium was formed by interaction between the species present in the gaseous phase under the reaction conditions and an oxide of cerium present.

**10.** Catalyst in accordance with claims 1-9, wherein a surface compound of aluminum was formed by interaction between the species present in the gaseous phase under the reaction conditions and an oxide of aluminum present.

**11.** Catalyst in accordance with claims 1-10, wherein a surface compound of silver was formed by interaction between the species present in the gaseous phase under the reaction conditions and metallic silver present.

**12.** Process for the preparation of the catalysts claimed in claims 1-11 which comprises the technique of damp impregnation which results in a catalyst with crystals of silver deposited on the MgO, $CeO_2$ and $Al_2O_3$ phases in a weight proportion 1:1:2, impregnated with an aqueous solution containing the desired quantity of silver precursor, evaporating of water, drying, grinding and heating at 500 °C under an air flow until complete decomposition of the silver precursor and reduction of the catalyst at 300 °C in $H_2$ flow for at least for 2 h, thereby achieving a dispersion of 80-85% in the catalyst 0.1% wt $Ag/25\%MgO-25\%CeO_2-Al_2O_3$.

**13.** Process for the preparation of the catalysts claimed in claims 6 and 7 which comprises the technique of damp impregnation which results in a catalyst with crystals of silver deposited on the MgO, $CeO_2$ and $Al_2O_3$ phases in a weight proportion 1:1:2, impregnated with an aqueous solution containing the desired quantity of silver precursor, evaporating of water, drying, grinding and heating at 500 °C under an air flow until complete decomposition of the silver precursor and reduction of the catalyst at 300 °C in $H_2$ flow for at least for 2 h, thereby achieving a dispersion of 80-85% in the catalyst 0.1% wt $Ag/25\%MgO-25\%CeO_2-Al_2O_3$; impregnating the resulting product with an aqueous solution containing the desired quantity of sulphate precursor, evaporating of water, drying, grinding and calcination at 600 °C in an air flow for 2 h.

**14.** Use of the catalysts claimed in any of the claims 1-11 towards the selective reduction of a product selected from the group consisting of nitric oxide (NO), nitrogen dioxide ($NO_2$) and a mixture of NO and $NO_2$, to nitrogen ($N_2$) gas using ethanol or an ethanol/hydrogen mixture as reducing agent, in the presence of oxygen ($O_2$).

**15.** Use of the catalysts claimed in any of the claims 1-11 towards the selective reduction of a product selected from the group consisting of nitric oxide (NO), nitrogen dioxide ($NO_2$) and a mixture of NO and $NO_2$, to nitrogen ($N_2$) gas using ethanol or an ethanol/hydrogen mixture as reducing agent, in the presence of oxygen ($O_2$) and one or more of the gasses selected from the group consisting of carbon monoxide (CO), carbon dioxide ($CO_2$) water ($H_2O$), and sulfur dioxide ($SO_2$) gases.

**16.** Use of the catalysts claimed in any of the claims 1-11 in any kind of reactor employed industrially in such processes, e.g., fixed bed reactor, monolith type reactor, etc., for the reduction of nitric oxide, nitrogen dioxide or mixture of nitric oxide and nitrogen dioxide to $N_2$ gas using ethanol or an ethanol/hydrogen mixture as reducing agent and in the presence and/or absence of oxygen and/or water and/or sulphur dioxide.

**Amended claims in accordance with Rule 137(2) EPC.**

**1.** Catalyst based on silver, suitable for removing nitric oxide (NO) from an exhaust gas by reduction by means of using ethanol or an ethanol/$H_2$ mixture as reducing agent in the temperature range of 150-400 °C and in the presence of oxygen, 5-10% vol $H_2O$ and/or up to 50 ppm $SO_2$ in the supply, which consists of Ag or any other precursor thereof in an amount equal or less than 1 wt% dispersed on a mixed oxide support of two or more of the elements: Mg (Magnesium), Ce (Cerium) and Al (Aluminum) or any other precursor thereof, wherein the content of Mg is equal or higher than 10 wt%, measured as magnesium oxide, by means of damp impregnation or sol-gel techniques, where all wt% ranges shall refer to the catalyst.

**2.** Catalyst in accordance with claim 1, **characterized in that** the preferred metallic content is of the order of 0.1 wt% Ag dispersed on a mixed oxide support of two or more of the elements: Mg (Magnesium), Ce (Cerium) and Al (Aluminum).

**3.** Catalyst in accordance with claims 1 and 2, which consists of Ag supported on a mixed oxide of 25 wt% MgO, 25 wt% $CeO_2$ and 50 wt% $Al_2O_3$.

**4.** Catalyst in accordance with claims 1-5, where the support and/or metallic phase are sulphated.

**5.** Catalyst for the reduction of nitric oxide with ethanol or an ethanol/hydrogen mixture in the presence of excess oxygen, in accordance with claims 1-4, further containing more than one of the following compounds: Ag, MgO, $CeO_2$, $Al_2O_3$, $Al_2(SO_4)_3$, $Al(OH)_3$, $Mg(OH)_2$, $MgSO_4$, $AgNO_3$, $Mg(NO_3)_2$, $Ce_2(SO_4)_3$, $Ag_2O$ and $Ag_2SO_4$, and which are all possibly formed in the catalyst $Ag/MgO$-$CeO_2$-$Al_2O_3$ under the conditions of preparation, calcination and reaction.

6. Process for the preparation of the catalysts claimed in claims 1-11 which comprises the technique of damp impregnation which results in a catalyst with crystals of silver deposited on the MgO, $CeO_2$ and $Al_2O_3$ phases in a weight proportion 1:1:2, impregnated with an aqueous solution containing the desired quantity of silver precursor, evaporating of water, drying, grinding and heating at 500˚C under an air flow until complete decomposition of the silver precursor and reduction of the catalyst at 300˚C in $H_2$ flow for at least for 2 h, thereby achieving a dispersion of 80-85% in the catalyst 0.1 wt% $Ag/25wt\%MgO$-$25wt\%CeO_2$-$Al_2O_3$.

7. Process for the preparation of the catalysts claimed in claims 6 and 7 which comprises the technique of damp impregnation which results in a catalyst with crystals of silver deposited on the MgO, $CeO_2$ and $Al_2O_3$ phases in a weight proportion 1:1:2, impregnated with an aqueous solution containing the desired quantity of silver precursor, evaporating of water, drying, grinding and heating at 500˚C under an air flow until complete decomposition of the silver precursor and reduction of the catalyst at 300 ˚C in $H_2$ flow for at least for 2 h, thereby achieving a dispersion of 80-85% in the catalyst 0.1 wt% $Ag/25wt\%MgO$-$25wt\%CeO_2$-$Al_2O_3$; impregnating the resulting product with an aqueous solution containing the desired quantity of sulphate precursor, evaporating of water, drying, grinding and calcination at 600˚C in an air flow for 2 h.

8. Use of the catalysts claimed in any of the claims 1-5 towards the selective reduction of a product selected from the group consisting of nitric oxide (NO), nitrogen dioxide ($NO_2$) and a mixture of NO and $NO_2$, to nitrogen ($N_2$) gas using ethanol or an ethanol/hydrogen mixture as reducing agent, in the presence of oxygen ($O_2$).

9. Use of the catalysts claimed in any of the claims 1-5 towards the selective reduction of a product selected from the group consisting of nitric oxide (NO), nitrogen dioxide ($NO_2$) and a mixture of NO and $NO_2$, to nitrogen ($N_2$) gas using ethanol or an ethanol/hydrogen mixture as reducing agent, in the presence of oxygen ($O_2$) and one or more of the gasses selected from the group consisting of carbon monoxide (CO), carbon dioxide ($CO_2$) water ($H_2O$), and sulfur dioxide ($SO_2$) gases.

10. Use of a catalytic converter that contains the catalysts claimed in any of the claims 1-5 in the form of washcoat or coating material, for the reduction of nitric oxide, nitrogen dioxide or mixture of nitric oxide and nitrogen dioxide to $N_2$ gas using ethanol or an ethanol/hydrogen mixture as reducing agent and in the presence and/or absence of oxygen and/or water and/or sulphur dioxide.

Figure 1

Figure 2

Figure 3

Figure 4

Figure 5

Figure 6

Figure 7

Figure 8

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 379 536 B1 (PETERS ALAN W [US] ET AL) 30 April 2002 (2002-04-30) <br> * claims 1,2,6,7 * <br> * column 2, lines 23-26, 50-52, 64-67 * <br> * column 3, lines 3-5, 41-62 * <br> * example 1 * <br> ----- | 1,2,4,5, 7 | INV. <br> B01J23/50 <br> B01D53/86 <br> B01D53/94 |
| X | WO 2006/093802 A2 (CATALYTIC SOLUTIONS INC [US]; MALYALA RAJASHEKHARAM V [US]; GOLDEN STE) 8 September 2006 (2006-09-08) <br> * claims 1,13,17 * <br> * page 12, line 32 - page 13, line 2 * <br> * page 14, line 3 - page 15, line 2 * <br> * page 15, lines 4-5,9-11 * <br> * page 20, lines 1-3 * <br> * table 6 * <br> ----- | 1,4,5,7, 14-16 | |
| X | PULLUR ANIL KUMAR ET AL: "Influence of Mg Addition on the Catalytic Activity of Alumina Supported Ag for C3H6-SCR of NO", CATALYSIS LETTERS, KLUWER ACADEMIC PUBLISHERS-PLENUM PUBLISHERS, NE, vol. 131, no. 1-2, 24 February 2009 (2009-02-24), pages 85-97, XP019728271, ISSN: 1572-879X, DOI: 10.1007/S10562-009-9895-0 <br> * abstract * <br> * page 86, left-hand column, last paragraph * <br> * page 87, left-hand column, paragraph 2nd-3rd * <br> * page 88, left-hand column, paragraph 2nd; figure 1 * <br> * page 91, left-hand column, paragraph 2nd - right-hand column; figure 6a * <br> ----- <br> -/-- | 1,2,4-8, 10,11, 14-16 | TECHNICAL FIELDS SEARCHED (IPC) <br><br> B01J <br> B01D |

The present search report has been drawn up for all claims

| Place of search | Date of completion of the search | Examiner |
|---|---|---|
| Munich | 5 September 2011 | Jourdan, Angelika |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

........................................................................
& : member of the same patent family, corresponding
   document

EPO FORM 1503 03.82 (P04C01)

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SHIMIZU ET AL: "Effect of modified-alumina supports on propane-hydrogen-SCR over Ag/alumina", CATALYSIS TODAY, ELSEVIER, NL, vol. 126, no. 3-4, 10 August 2007 (2007-08-10), pages 266-271, XP022192663, ISSN: 0920-5861, DOI: 10.1016/J.CATTOD.2007.06.026 * abstract * * page 266, left-hand column, last paragraph * * page 267, left-hand column, paragraph 2nd; table 1 * * page 267, right-hand column, last paragraph * * page 268; figures 1,3 * * page 270; figure 7 * ----- | 1,2,4,5, 7,14-16 | |
| A | HONG HE ET AL: "Precipitable silver compound catalysts for the selective catalytic reduction of NOx by ethanol", APPLIED CATALYSIS A: GENERAL, vol. 375, no. 2, 1 March 2010 (2010-03-01), pages 258-264, XP55005961, ISSN: 0926-860X, DOI: 10.1016/j.apcata.2010.01.002 * the whole document * ----- | 1-16 | TECHNICAL FIELDS SEARCHED (IPC) |

The present search report has been drawn up for all claims

| Place of search | Date of completion of the search | Examiner |
|---|---|---|
| Munich | 5 September 2011 | Jourdan, Angelika |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 10 39 0001

This annex lists the patent family members relating to the patent documents cited in the above-mentioned European search report.
The members are as contained in the European Patent Office EDP file on
The European Patent Office is in no way liable for these particulars which are merely given for the purpose of information.

05-09-2011

| Patent document cited in search report | | Publication date | Patent family member(s) | | Publication date |
|---|---|---|---|---|---|
| US 6379536 | B1 | 30-04-2002 | NONE | | |
| WO 2006093802 | A2 | 08-09-2006 | BR | PI0607613 A2 | 22-09-2009 |
| | | | CN | 101137439 A | 05-03-2008 |
| | | | EP | 1866088 A2 | 19-12-2007 |
| | | | JP | 4686553 B2 | 25-05-2011 |
| | | | JP | 2008531260 A | 14-08-2008 |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1475149 A

- US 0090393 A


**Non-patent literature cited in the description**

- **G. BUSCA ; L. LIETTI ; G. RAMIS ; F. BERTI.** *Appl. Catal. B,* 1998, vol. 18, 1
- **C. J. PERERIA ; K.W. PHUMLEE.** *Catal. Today,* 1992, vol. 13, 23
- **A. FRITZ ; V. PITCHON.** *Appl. Catal. B,* 1997, vol. 13, 1
- **T. A. HEWSON, JR. ; J.B. STAMBERG.** Energy ventures analysis. Midwest Ozone Group, November 1995
- **R.I. PUSATERI ; J.R. KATZER ; W.H. MONAQUE.** *AICHE J.,* 1974, vol. 20, 219
- **B. FRANK ; G. EMIG ; A. RENKEN.** *Appl. Catal. B: Envir.,* 1998, vol. 19, 45
- **R. BURCH ; M.D. COLEMAN.** *Appl. Catal. B. Envir.,* 1999, vol. 23, 115
- **A. UEDA ; T. NAKAO ; M. AZUMA ; T. KOBAYASHI.** *Catal. Today,* 1998, vol. 45, 135
- **K. YOKOTA ; M. FUKUI ; T. TANAKA.** *Appl. Surf. Sci,* 1997, vol. 121/122, 273
- **M. MACHIDA ; S. IKEDA ; D. KUROGI ; T. KIJIMA.** *Appl. Catal. B: Envir.,* 2001, vol. 35, 107
- **R. BURCH ; P.J. MILLINGTON ; A.P. WALKER.** *Appl. Catal B. Envir.,* 1994, vol. 4, 160
- **M. FUKUI ; K. YOKATA, SHOKUBAI.** *Catalysts and Catalysis,* 1994, vol. 36, 160
- **C.N. COSTA ; V.N. STATHOPOULOS ; V.C. BELESSI ; A.M. EFSTATHIOU.** *J. Catal.,* 2001, vol. 197, 350
- **C.N. COSTA ; A.M. EFSTATHIOU.** *Appl. Catal. B: Environmental,* 2006, vol. 72, 241
- **T. TABATA ; M. KOKITSU ; O. OKADA.** *Catal. Today,* 1994, vol. 22, 147
- **PARVULESCU, P. GRANGE ; B. DELMON.** *Catal. Today,* 1998, vol. 46, 233
- **A. OBUCHI ; A. OHI ; M. NAKAMURA ; A. OGATA ; K. MIZUNO ; H. OHUCHI.** *Appl. Catal. B,* 1993, vol. 2, 71
- **R. BURCH ; P.J. MILLINGTON ; A.P. WALKER.** *Appl. Catal. B,* 1995, vol. 4, 65
- **D.K. CAPTAIN ; K.L. ROBERTS ; M.D. AMIRIDIS.** *Catal.Today,* 1998, vol. 42, 65
- **R. BURCH ; J.A.SULLIVAN ; T.C. WATLING.** *Catal. Today,* 1998, vol. 42, 13

- **R. BURCH ; A. RAMLI.** *Appl. Catal. B,* 1998, vol. 15, 63
- **M.D. AMIRIDIS ; K..L. ROBERTS ; C.J. PERRERIA.** *Appl. Catal. B,* 1997, vol. 14, 203
- **G.R. BAMWENDA ; A. OGATA ; A. OBUCHI ; J. OI ; K. MIZUNO ; J. SKRZYPEK.** *Appl. Catal. B,* 1993, vol. 2, 71
- **E.A. EFTHIMIADES ; S.C. CHRISTOFOROU ; A.A. NIKOLOPOULOS ; I.A. VASALOS.** *Appl. Catal. B: Envir.,* 1999, vol. 22, 91
- **E. SEKER ; J. CAVATIO ; E. GULARI ; P. LORPONGPAIBOON ; S. OSUWAN.** *Appl. Catal. A,* 1999, vol. 183, 121
- **H. HIRABAYASHI ; H. YAHIRO ; N. MIZUNO ; M. IWAMOTO.** *Chem. Lett.,* 1992, 2235
- **G. ZHANG ; T. YAMAGUCHI ; H. KAWAKAMI ; T. SUZUKI.** *Appl. Catal. B: Envir.,* 1992, vol. 1, L1519
- **A. OBUCHI ; A. OHI ; M. NAKAMURA ; A, OGATA ; K. MIZUNO ; H. OHUCHI.** *Appl. Catal. B: Envir.,* 1993, vol. 2, 71
- **W. GRUNERT et al.** *Chem. Tech.,* 1995, vol. 47, 205
- Handbook of Heterogeneous Catalysis. VCH, 1997, 1633
- **E. JOUBERT ; X. COURTOIS ; P. MARECOT ; D. DUPREZ.** *Appl. Catal. B : Envir.,* 2006, vol. 64, 103
- **F.T. VIEIRA ; M.A.S. BALDANZA ; M. SCHMAL.** *Catal. Today,* 2010, vol. 149, 304
- **L.F. DE MELLO ; F.B. NORONHA ; M. SCHMAL.** *J. Catal.,* 2003, vol. 220, 358
- **L.F. DE MELLO ; M.A.S. BALDANZA ; F.B. NORONHA ; M. SCHMAL.** *Catal. Today,* 2003, vol. 85, 3
- **T. MIYADERA.** *Appl. Catal. B: Envir.,* 1998, vol. 16, 155
- **R. DA SILVA ; R. CATALUNA ; A. MARTÍNEZ-ARIAS.** *Catal. Today,* 2009, vol. 143, 242
- **Y.H. YEOM ; M. LI ; W.M.H. SACHTLER ; E. WEITZ.** *J. Catal.,* 2007, vol. 246, 413
- **J.H. LEE ; S.J. SCHMIEG ; SE. H, OH.** *Appl. Catal. A: General,* 2008, vol. 342, 78

- **M. BOUTROS ; J.-M. TRICHARD ; P. DA COSTA.** *Appl. Catal. B: Envir.,* 2009, vol. 91, 640
- **S. DZWIGAJ ; J. JANAS ; T. MACHEJ ; M. CHE.** *Catal. Today,* 2007, vol. 119, 133
- **M.G. RUSSELL.** *Clin. Microbiol. Rev.,* 1999, vol. 12 (1), 147
- **J. GOETTEMOELLER ; A. GOETTEMOELLER.** Sustainable Ethanol: Biofuels, Biorefineries, Cellulosic Biomass, Flex-fuel Vehicles, and Sustainable Farming for Energy Independence. Prairie Oak Publishing, 2007
- **J.M. APPEL.** Physicians are not Bootleggers: The short, peculiar life of the medicinal alcohol movement. *Bulletin of the History of Medicine,* 2008, vol. 82 (2), 355
- **B. KAMM ; P.R. GRUBER ; M. KAMM.** Biorefineries-industrial Processes and Products. Wiley, 2008
- **A.E. WHEALS ; L.C. BASSO ; D.M.G. ALVES ; H.V. AMORIM.** *Trends in Biotechnology,* 1999, vol. 17 (12), 482
- CFDC: Clean Fuels Development Coallition. The Ethanol Fact Book. 2007
- **G. CENTI.** *J. Mol. Catal. A: Chemical,* 2001, vol. 173, 287
- **B. RAMACHANDRAN ; G.R. HERMAN ; S. CHOI ; H.G. STENGER ; C.E. LYMAN ; J.W. SALE.** *Catal. Today,* 2000, vol. 55, 281
- **R. KHODAYARI ; C.U.I. ODENBRAND.** *Appl. Catal. B: Envir.,* 2001, vol. 33, 277
- **K. BALAKRISHNAN ; R.D. GONZALEZ.** *J. Catal.,* 1993, vol. 144, 395

- **S. GALVANO ; G. PARAVANO.** *J. Catal.,* 1978, vol. 55, 178
- **J.R. ROSTRUP-NIELSEN.** *Catal. Today,* 1993, vol. 18, 305
- **I. ALSTRUP.** *J. Catal.,* 1998, vol. 109, 241
- **S.T.CEYER ; Q.Y. YANG ; M.B. LEE ; J.D. BECKERLE ; A.D. JOHNSON.** *Stud. Surf. Sci. Catal.,* 1987, vol. 36, 51
- **I. ALSTRUP ; M.T. TRAVERS.** *J. Catal.,* 1992, vol. 135, 147
- **T.B. BEEBE, JR. ; D.W. GODDMAN ; B.D. KAY ; T.J. YATES, JR.** *J. Chem. Phys.,* 1987, vol. 87, 2305
- **I. ALSTRUP ; I. CHORKENDORFF ; S. ULLMANN.** *Surf. Sci.,* 1990, vol. 234, 79
- **H.J. TOPFER.** *Gas Wasserfach,* 1976, vol. 117, 412
- **S. TENNER.** *Hydrocarbon Processing,* 1987, vol. 66 (7), 42
- **A.T. ASHCROFT ; A.K. CHEETHAM ; M.L.H. GREEN ; P.D.F. VERNON.** *Nature,* 1991, vol. 352, 225
- **J.T. RICHARDSON ; S.A. PARIPATYADAR.** *Appl. Catal,* 1990, vol. 61, 293
- **I.M. BODROV ; L.O. APEL'BAUM.** *Kinet. Katal.,* 1967, vol. 8, 379
- **I.M. BODROV ; L.O. APEL'BAUM.** *Kinet. Katal.,* 1964, vol. 5, 696
- **J.P. GOMEZ ; J.L.G. FIERRO.** *Appl. Catal. A: Chemical,* 1996, vol. 144, 7